# EUROPEAN PATENT APPLICATION

(11) **EP 2 833 245 A2**
(43) Date of publication of application: **04.02.2015**
(21) Application number: 14167463.0
(22) Date of filing: 08.05.2014
(51) Int. Cl.: G06F 3/041, G06F 3/044

(54) **Display apparatus and control method thereof**

(30) Priority: 30.07.2013 KR 20130090197
(71) Applicant: Samsung Electronics Co., Ltd, Gyeonggi-do 443-742 (KR)
(72) Inventor: Park, Han-jin, Gyeonggi-do (KR); Min, Kwan-sik, Gyeonggi-do (KR); Kim, Dong-hyun, Seoul (KR); Cho, Eun-Il, Gyeonggi-do (KR)
(74) Representative: Bray, Richard Anthony

(57) **Abstract**

Disclosed are a display apparatus (1) and a control method thereof, the display apparatus including: a display (13) which displays an image (601); a touch panel (15) which includes a plurality of pulse transmitting lines (603) distributed with regard to a touch area of the touch panel, where voltage pulses are transmitted to the plurality of pulse transmitting lines, and a plurality of receiving lines (602) distributed with regard to the touch area configured to detect a user's touch input on the touch area based on the voltage pulses transmitted to the pulse transmitting lines; and a controller (16) configured to control a number of the voltage pulses to the plurality of pulse transmitting lines, where the number of the voltage pulses transmitted to the plurality of pulse transmitting lines (612) corresponding to a touch expectation area (606, 607) of the touch area is greater than those voltage pulses transmitted (613) to other areas of the touch area.

## Description

### BACKGROUND

### Field

Apparatuses and methods consistent with the exemplary embodiments relate to a display apparatus and a control method thereof, and more particularly to a display apparatus and a control method thereof, which includes a touch panel and operates by receiving a user's touch input.

### Description of the Related Art

A display apparatus such as a television, a smart phone, a smart pad, a tablet personal computer (PC), a mobile phone, etc. includes a touch panel and operates by receiving a user's touch input. The touch panel is attached to a front surface of the display apparatus, detects a position touched by a user's hand or touch tool, and converts a detection result into an electric signal. Such a touch panel has rapidly replaced conventional input devices, such as a button or a keyboard and a mouse, and has widely spread.

The present embodiment relates to technology for improving receiving sensitivity in an operating method of the currently used touch panel, e.g., a capacitive method. In order to improve the receiving sensitivity in the capacitive method, a level of a signal to be sensed may be raised by increasing a level of a voltage pulse of a transmission channel, or the number of times the voltage pulses are transmitted may be increased.

However, there is a limit to the method of increasing the level of the voltage pulse because it increases power consumption and cannot raise the level over a certain limit in accordance with scales or limits of the apparatus. Further, there is a limit to the method of increasing the number of times the voltage pulses are transmitted because it attenuates the voltage pulses due to linear resistance generated in the channel, and cannot largely increase the number of times the voltage pulses are transmitted because of resistor-capacitor (RC) delay due to line capacitance. In addition, in a time interleaved method of sequentially generating the voltage pulses with regard to a plurality of channels, transmission time corresponding to each channel is restricted, and thus there is a limit on increasing the number of times the voltage pulses are transmitted within a restricted time. The above limitation causes a problem with a display apparatus having a large (touch) screen as well as a small apparatus having a (touch) display, such as a smart phone, a mobile phone, a smart pad, a tablet PC, etc., where this problem is more serious.

### SUMMARY

According to the present invention there is provided an apparatus and method as set forth in the appended claims. Other features of the invention will be apparent from the dependent claims, and the description which follows.

One or more exemplary embodiments may provide a display apparatus with a touch panel and a control method thereof, which can detect a user's touch input by more improved receiving sensitivity.

According to an aspect of an exemplary embodiment, there is provided a display apparatus includes: a display which displays an image; a touch panel (for receiving a touch input from a user) which includes a plurality of pulse transmitting lines distributed with regard to a touch area of the touch panel, where voltage pulses are arranged to be transmitted to the plurality of pulse transmitting lines, and a plurality of receiving lines distributed with regard to the touch area configured to detect a user's touch input on the touch area based on the voltage pulses transmitted to the pulse transmitting lines; and a controller configured to control a number of the voltage pulses to the plurality of pulse transmitting lines, where the number of the voltage pulses transmitted to the plurality of pulse transmitting lines corresponding to a touch expectation area of the touch area is greater than those voltage pulses transmitted to other areas (e.g. not including the touch expectation area, or other than the touch expectation area) of the touch area.

The touch panel may be provided on the entire surface of the display.

The touch expectation area may include an area for an item having a graphic user interface (GUI) which is displayed on the display.

The controller may be configured to determine the area for the item through information provided by an application configured to display the item.

The controller may recognize the area for the item by analyzing an image being displayed on the display.

Once the touch input is detected, the controller may be configured to determine an area at a position, where the touch input is detected, to be the touch expectation area.

If the user's touch input is moved, the controller may be configured to move the touch expectation area along the movement of the touch input.

The display apparatus may further include a storage unit which may be configured to store touch probability information given based on a probability that the user's touch input will be generated at a predetermined position of the touch area.The controller may determine the touch expectation area based on the touch probability information.

If the user's touch input is detected, the controller may be configured to update the touch probability information corresponding to a position where the touch input is detected.

The storage unit may be configured to store the touch probability information provided corresponding to a plurality of applications and/or a plurality of users.

The user's touch input may be achieved by a user's finger or a touch pen, and a size of the touch expectation area may be determined in accordance with the user's finger and the touch pen (for example a size of a touch surface thereof).

The number of the voltage pulses transmitted to the plurality of pulse transmitting lines may gradually increase the closer each of the plurality of pulse transmitting lines is to a center (e.g. point or area) of the touch expectation area.

According to an aspect of an exemplary embodiment, there is provided a method of controlling a display apparatus including a display for displaying an image, and a touch panel for detecting a user's touch input, including: transmitting voltage pulses to a plurality of pulse transmitting lines distributed with regard to a touch area of the touch panel; detecting a user's touch input on the touch area, based on the voltage pulses transmitted to the pulse transmitting lines; and controlling a number of the voltage pulses transmitted to the plurality of pulse transmitting lines, wherein the number of the voltage pulses transmitted to the plurality of pulse transmitting lines corresponding to a touch expectation area of the touch area is greater than those voltage pulses transmitted of other areas (e.g. not including the touch expectation area, or other than the touch expectation area) of the touch area.

The touch expectation area may include determining an area for an item of a graphic user interface (GUI) which is displayed on the display, wherein the display may be provided with the touch panel.

The controlling may include determining the area for the item using information provided by an application configured to display the item.

The controlling may include recognizing the area for the item by analyzing an image being displayed on the display.

The controlling may include determining an area at a position, where the touch input is detected, to be the touch expectation area once the touch input is detected.

The method may further include moving the touch expectation area along with the movement of the touch input if the user's touch input is moved.

The controlling may include determining the touch expectation area based on touch probability information given based on a probability that the user's touch input will be generated at a predetermined position of the touch area and stored in a storage unit.

The controlling may include updating the touch probability information corresponding to a position where the touch input is detected, if the user's touch input is detected.

The touch probability information may be provided as corresponding to a plurality of applications or a plurality of users.

The user's touch input may be achieved by a user's finger or a touch pen, and the controlling may include determining a size of the touch expectation area in accordance with the user's finger and the touch pen (for example a size of a touch surface thereof).

The number of the voltage pulses transmitted to the plurality of pulse transmitting lines may gradually increase as the closer each of the plurality of pulse transmitting lines is to a center (e.g. point or area) of the touch expectation area.

According to an aspect of an exemplary embodiment, there is provided a touch panel which includes a plurality of pulse transmitting lines distributed with regard to a touch area of the touch panel, where voltage pulses are transmitted to the plurality of pulse transmitting lines, and a plurality of receiving lines distributed with regard to the touch area configured to detect a user's touch input on the touch area based on the voltage pulses transmitted to the pulse transmitting lines; and a controller configured to control a number of the voltage pulses to the plurality of pulse transmitting lines, where the number of the voltage pulses transmitted to the plurality of pulse transmitting lines corresponding to a touch expectation area of the touch area is greater than those voltage pulses transmitted to other areas of the touch area. The touch panel may be used in conjunction with a display apparatus.

One or more features of one or more aspects of the invention may be used in place of or in combination with one or more features of one or more other aspects of the invention, unless clearly mutually exclusive from the perspective of the skilled person from a reading of this entire disclosure.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram showing a configuration of a display apparatus according to an exemplary embodiment;
FIGs. 2 and 3 illustrate a structure of a touch panel according to an exemplary embodiment;
FIG. 4 shows a configuration of a controller according to an exemplary embodiment;
FIG. 5 is a flowchart showing operations of the controller according to an exemplary embodiment;
FIG. 6 is a view for explaining control for voltage pulses according to an exemplary embodiment;
FIG. 7 is a flowchart showing operations of the controller according to an exemplary embodiment;
FIG. 8 is a flowchart showing operations of the controller according to an exemplary embodiment;
FIG. 9 is a flowchart showing operations of the controller according to an exemplary embodiment;
FIG. 10 shows an example that the controller determines a touch expectation area according to an exemplary embodiment;
FIG. 11 is a flowchart showing operations of the controller according to an exemplary embodiment;
FIG. 12 shows exemplary sizes of the touch expectation areas according to an exemplary embodiment;
FIG. 13 illustrates an example of a touch area according to an exemplary embodiment;
FIG. 14 illustrates an example of a table of touch probability information according to an exemplary embodiment; and
FIG. 15 is a flowchart showing operations of the controller according to an exemplary embodiment.

### DETAILED DESCRIPTION OF EXEMPLARY EMBODIMENTS

Certain exemplary embodiments will be described in detail. Exemplary embodiments, however, may be embodied in many different forms and should not be construed as being limited to the embodiments set forth herein; rather, these exemplary embodiments are provided so that this disclosure will be thorough and complete, and will fully convey the concept of the disclosure to those skilled in the art. In the drawings, like reference numerals denote like elements, and thus their descriptions will be omitted.

Hereinafter, the term "unit" refers to a software component, or a hardware component such as FPGA or ASIC, and performs a certain function. However, the "unit" is not limited to software or hardware. The "unit" may be configured in an addressable storage medium and may be configured to be executed by one or more processors. Hence, the "unit" includes elements such as software elements, object-oriented software elements, class elements, and task elements, and processes, functions, attributes, procedures, subroutines, segments of program codes, drivers, firmware, micro-codes, circuits, data, databases, data structures, tables, arrays, and variables. The functions provided in the elements and units may be combined into a fewer number of elements and units or may be divided into a larger number of elements and units.

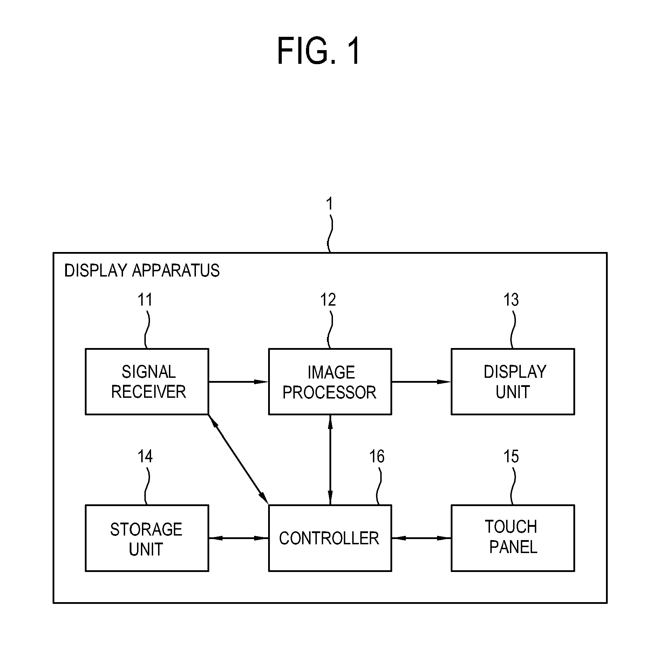

FIG. 1 is a block diagram showing a configuration of a display apparatus according to an exemplary embodiment. The display apparatus 1 may be achieved by a television (TV), a Smart phone, a Smart pad, a tablet PC, a mobile phone, etc. The display apparatus 1 may include a signal receiver 11, an image processor 12, a display unit (i.e., display) 13, a storage unit 14, a touch panel 15 and a controller 16.

The signal receiver 11 receives an image signal. For example, the image signal may be a broadcasting signal of a TV. The broadcasting signal may be broadcasted by a method such as airwave broadcasting, cable broadcasting, satellite broadcasting, etc. The broadcasting signal has a plurality of channels. The signal receiver 11 may receive a broadcasting signal of one channel selected by a user among the plurality of channels. Alternatively, the image signal may be received, for example, from a video device such as a double versatile disc (DVD) player, a Blue-ray disc (BD) player, etc.; a personal computer (PC); a network such as the Internet; a network such as Bluetooth and Wi-Fi; or a memory such as a universal serial bus (USB) storage medium.

The image processor 12 processes the received image signal to be displayed as an image on the display unit 13. The image processor 12 may perform image processing such as modulation, demodulation, multiplexing, demultiplexing, analog-digital conversion, digital-analog conversion, decoding, encoding, image enhancement, scaling, etc.

The display unit 13 displays an image based on the image signal processed by the image processor 12. The display unit 13 may be or comprises a type of panel such as a liquid crystal display (LCD), a plasma display panel (PDP), an organic light emitting diode (OLED), etc. to display an image. The storage unit 14 is a non-volatile memory such as a flash memory, a hard disk, etc., which stores data or information of a program needed for operating the display apparatus 1.

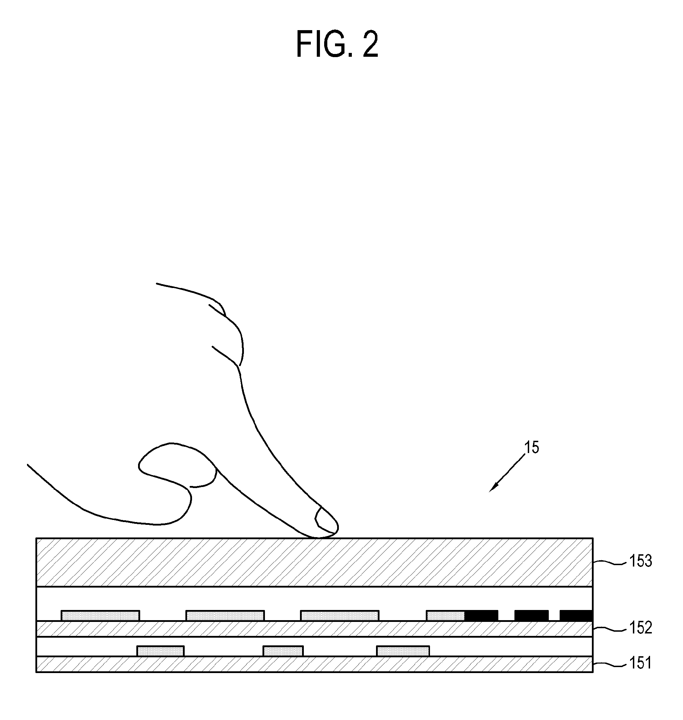

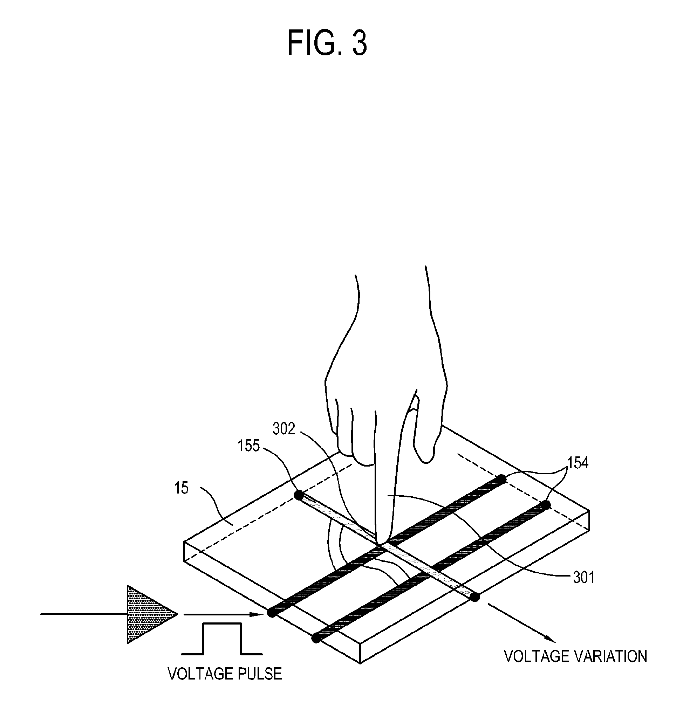

The touch panel 15 detects a user's touch input. FIGs. 2 and 3 illustrate a structure of a touch panel 15 according to an exemplary embodiment. The touch panel 15 may be provided on the entire surface of the display unit 13, or at least the portion of the unit that is capable of displaying an image (e.g. a side on which an image is displayed). First, referring to FIG. 2, the touch panel 15 may include a transmitting sensor layer 151 and a receiving sensor layer 152 for sensing a user's touch input, and a window glass 153 to be actually touched with a user's finger(s) or a touch pen. The touch panel 15 may be achieved by a GFF or G2 structure using a transparent electrode such as indium tin oxide (ITO), metal mesh, Ag nano wire, etc. or by a flexible printed circuit board (FPCB) having a structure where conductive materials are arranged on a substrate made of an opaque and flexible film, or the like.

FIG. 3 shows part of an area of the touch panel 15. Referring to Fig.2 and FIG. 3, the transmitting sensor layer 151 includes a plurality of pulse transmitting lines 154 for transmitting voltage pulses, and the receiving sensor layer 152 includes a plurality of receiving lines 155 (only one being shown in FIG. 3) arranged to intersect, or at least overlaps or cross, the plurality of pulse transmitting lines 154. The number of pulse transmitting lines 154, and the number of receiving lines 155 may be varied depending on the size of the display unit 13, and may, for example, be provided with tens or dozens of pulse transmitting lines 154 and/or receiving lines 155.

The controller 16 transmits voltage pulses (e.g. square wave pulses) having a predetermined amplitude to the plurality of pulse transmitting lines 154. If the voltage pulses flow in the pulse transmitting line 154, an electromagnetic field is formed between the pulse transmitting line 154 and the receiving line 155, thereby coupling a voltage having a predetermined level to the receiving line 155. At this time, if a user's hand 301 approaches the touch panel 15, the electromagnetic field is partially absorbed in, or affected by, the user's hand 301 and therefore total energy received in the receiving line 155 is reduced or at least changes. Such a change in energy causes voltage variation in the receiving line 155, and thus a position 302 where touch is generated can be determined based on this voltage variation.

The controller 16 controls so that the number of times voltage pulses are transmitted to the pulse transmitting line 154 corresponding to an area where relatively many touches are expected or a touch is more likely to be expected (hereinafter referred to as a 'touch expectation area'), among touch areas 401, so the number of voltage pulses sent to the pulse transmitting lines 154 in touch areas 401 is greater than those voltage pulses sent to the pulse transmitting lines 154 of the other areas.

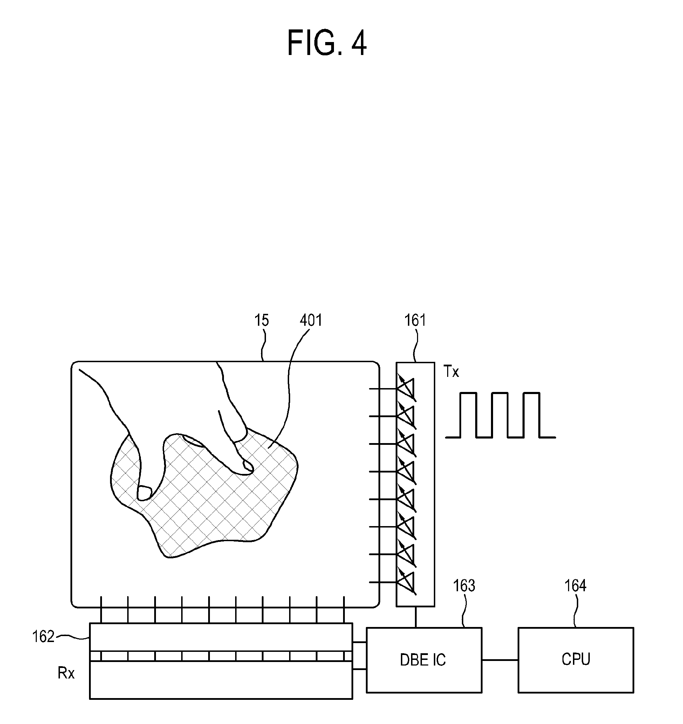

FIG. 4 shows a configuration of the controller 16 according to an exemplary embodiment. As shown in FIG. 4, the controller 16 may include a transmitting circuit 161 for transmitting the voltage pulses to the plurality of pulse transmitting lines 154, a receiving circuit 162 for receiving voltage from the plurality of receiving lines 155, a digital back end (DBE) integrated circuit (IC) 163 for analyzing the voltage received from the receiving circuit 162 to determine the position of the touch input and for controlling the number of times voltage pulses are transmitted to the pulse transmitting line(s) 154, and a central processing unit (CPU) 164 for transmitting and receiving information about the position of the touch input, the control for the voltage pulses, etc., and for performing image analysis, processing related to touch probability, etc.

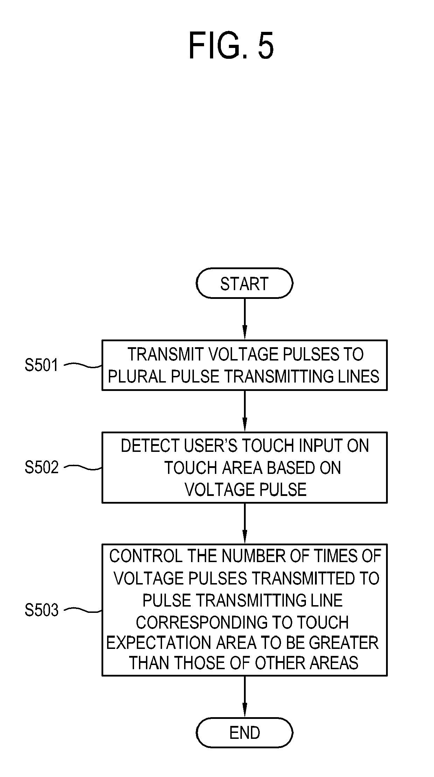

FIG. 5 is a flowchart showing operations of the controller 16 according to an exemplary embodiment. First, at operation S501, the controller 16 transmits the voltage pulses to the plurality of pulse transmitting lines 154. Next, at operation S502, the controller 16 detects a user's touch input on the touch area based on the voltage variation generated in the plurality of receiving lines 155 due to the voltage pulses. Next, at operation S503, the controller 16 controls the number of times the voltage pulses are transmitted to the pulse transmitting line 154, corresponding to the touch expectation area, to be greater than those of the other areas. In an embodiment, steps S502 and S503 may be undertaken in combination, or step S503 may be undertaken before step S502.

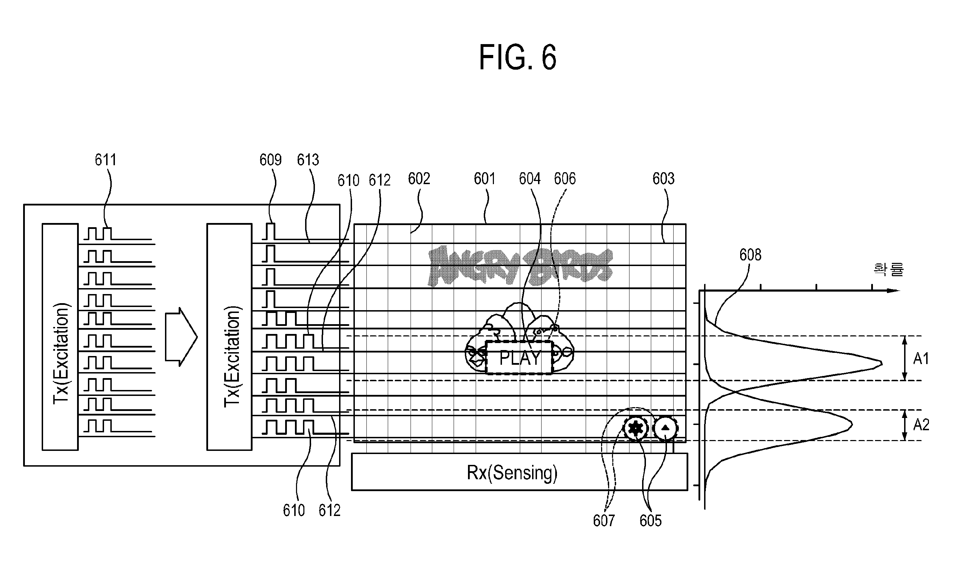

FIG. 6 is a view for explaining control for voltage pulses according to an exemplary embodiment. The display unit 13 displays an image 601 of an application currently executed in the display apparatus 1. The image 601 may include a graphic user interface (GUI) items 604 and 605 given for receiving a user's input in the application. The controller 16 may determine areas 606 and 607 of the GUI items 604 and 605 as the touch expectation areas. Referring to a probability distribution graph 608 of FIG. 6, there is a much greater probability that a user will touch the areas 606 and 607 of the GUI items 604 and 605 to make an input while using the application. That is, it will be appreciated that a probability distribution graph 608 has peaks in sections A1 and A2 corresponding to (that is, including) the areas 606 and 607 of the GUI items 604 and 605, respectively.

In FIG. 6, a horizontal line 603 and a vertical line 602 show arrangements of the pulse transmitting line and the receiving line, respectively. The arrangements of the pulse transmitting line 603 and the receiving line 602 shown in FIG. 6 are nothing but an example, and may have various forms. For example, in another example (not shown) the pulse transmitting line may be arranged vertically (602) and the receiving line may be arranged horizontally (603). Also, the pulse transmitting line and the receiving line may be exchanged with each other in accordance with changes between landscape and portrait orientations of the screen.

Referring back to FIG.6, the controller 16 controls the number of times voltage pulses are transmitted to the pulse transmitting line 612, corresponding to the touch expectation areas 606 and 607 among the plurality of pulse transmitting lines 603 to be greater than the other pulse transmitting line 613. For example, while the voltage pulses are transmitted once (refer to reference numeral '609') to the other pulse transmitting line(s) 613, the voltage pulses are transmitted, for example, three times (refer to reference numeral '610') to the pulse transmitting line 612 corresponding to the touch expectation areas 606 and 607. The nearer the pulse transmitting line is to each center of the touch expectation areas 606 and 607, the greater the number of times the voltage pulses are transmitted to the pulse transmitting lines 603, as shown in the Figure.

Accordingly, many (or more) voltages pulses are transmitted to the touch expectation areas 606 and 607, so that receiving sensitivity of the touch input can be improved. For example, in a particular case where the voltage pulses are sequentially transmitted to the plurality of pulse transmitting lines 603, the number of times the voltage pulses are transmitted per pulse transmitting line may be restricted due to a time limit. For example, the voltage pulses may be equally transmitted two times (refer to a reference numeral of '611') to all the pulse transmitting lines 603 within a given time limit. However, in this case, the number of times the voltage pulses are transmitted cannot be increased due to the time limit, and it is thus difficult to improve the receiving sensitivity of the touch input. On the other hand, in this exemplary embodiment, there is relatively little probability that the areas except the touch expectation areas 606 and 607 will be touched, and thus time is secured by decreasing the number of times of voltage pulses corresponding to the pulse transmitting line 613. Using the secured time, a lot of voltage pulses can be transmitted to the pulse transmitting lines 612 corresponding to the touch expectation areas 606 and 607, thereby improving the receiving sensitivity of the touch expectation areas 606 and 607 where many touches occur. In other words, in this exemplary embodiment, the number of times the voltage pulses are transmitted to the pulse transmitting line 603 is actively distributed based on touching probability. Accordingly, the number of times the voltage pulses are transmitted is increased to the touch expectation areas 606 and 607 having a much greater probability of being touched, but decreased with regard to the other areas, thereby improving the receiving sensitivity without adding any additional hardware device while maintaining a given sensing time (i.e., a report, detecting or sensing rate).

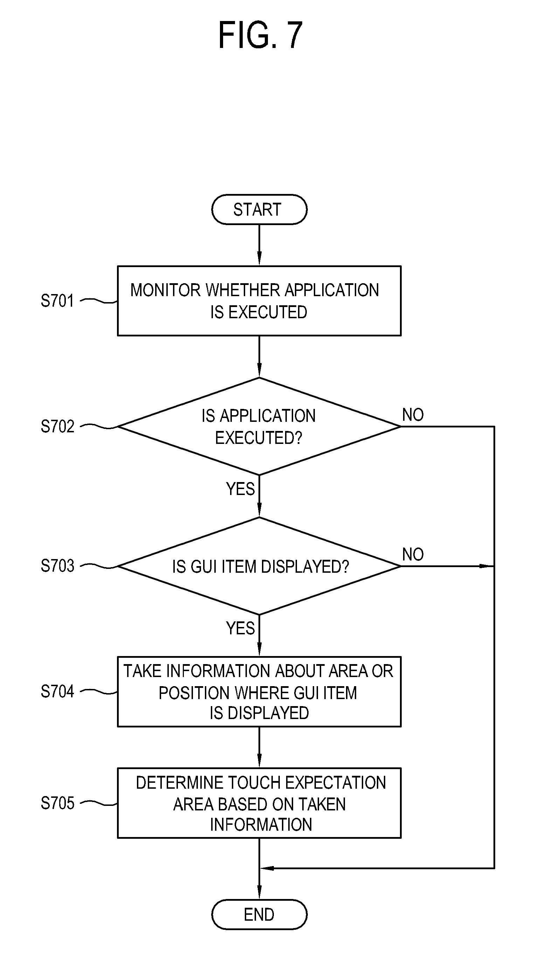

FIG. 7 is a flowchart showing operations of the controller 16 according to an exemplary embodiment. First, at operation S701, the controller 16 monitors whether an application is executed or not. Next, if the controller 16 determines at operation S702 that the application is executed, it determines at operation S703 whether the display unit 13 displays the GUI items 604 and 605. If it is determined that the display unit 13 displays the GUI items 604 and 605, at operation S704 the controller 16 takes information about areas 606 and 607 or positions where the GUI items 604 and 605 are displayed. The information about the areas 606 and 607 or the positions where the GUI items 604 and 605 are displayed may be acquired by referring to information of an application program interface (API) used by the executed application to display the GUI items 604 and 605. Next, at operation S705, the controller 16 determines the touch expectation areas 606 and 607 based on the taken information.

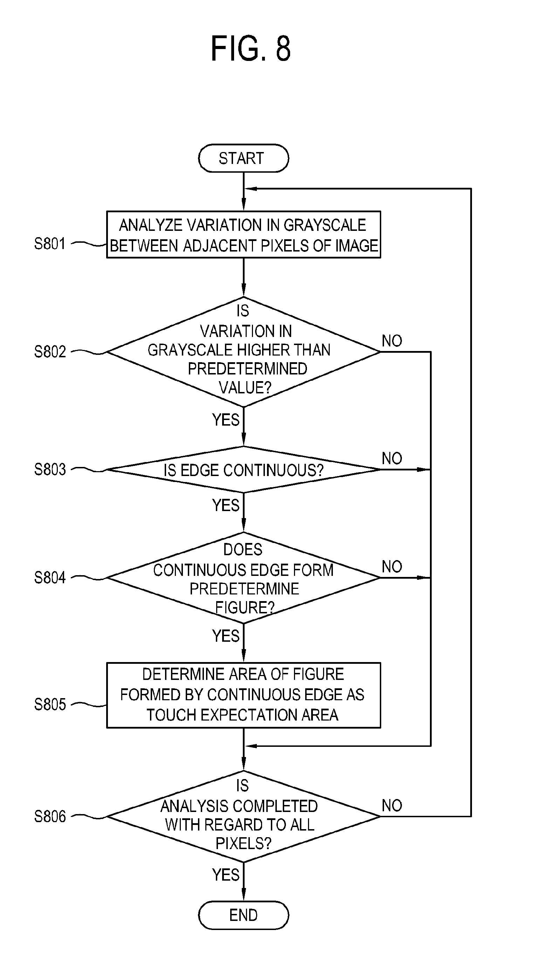

Alternatively, the controller 16 may recognize the areas 606 and 607 of the GUI items 604 and 605 by analyzing a displayed image 601. This method may be used when the information about the positions of the GUI items 604 and 605 or the areas 606 and 607 cannot be taken. FIG. 8 is a flowchart showing operations of the controller 16 according to an exemplary embodiment. First, at operation S801, the controller 16 analyzes variation in grayscale between neighboring pixels of an image 601. Next, at operation S802, the controller 16 determines whether the variation in the grayscale is equal to or greater than a predetermined value. That is, it is determined whether the variation in the grayscale between the neighboring pixels indicates an edge. Referring back to FIG. 6, the GUI items 604 and 605 are individual and independent objects, and therefore the grayscale is rapidly varied in boundaries 606 and 607 adjacent to neighboring images, thereby forming a so-called edge. Referring back to FIG. 8, if the grayscale variation is equal to or greater than a predetermined value at operation S802, the controller 16 determines the grayscale variation as the edge and determines whether the edge is continuous at operation S803. That is, it is determined whether the edge is continuous or not in accordance with the boundaries 606 and 607 of the GUI items 604 and 605. If the edge is continuous at operation S803, the controller 16 determines whether the continuous edge forms a predetermined figure (i.e. shape) at operation S804. That is, the GUI items 604 and 605 are likely to be a certain figure such as a rectangle, a circle, etc., and it is therefore determined whether the continuous edge corresponds to one of the certain figures. If it is determined at operation S804 that the continuous edge forms a predetermined figure, the controller 16 determines the areas 606 and 607 having the predetermined figure formed by the continuous edges as the touch expectation area at operation S805. Next, at operation S806, the controller 16 determines whether all pixels of the image 601 are completely analyzed. If the analysis is not completed yet, the controller 16 returns to the operation S801, and otherwise, it terminates the operation.

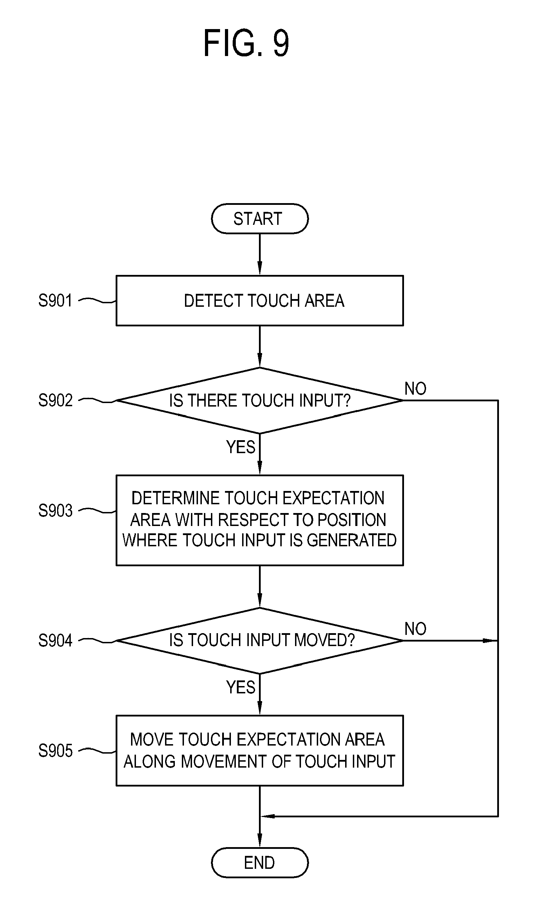

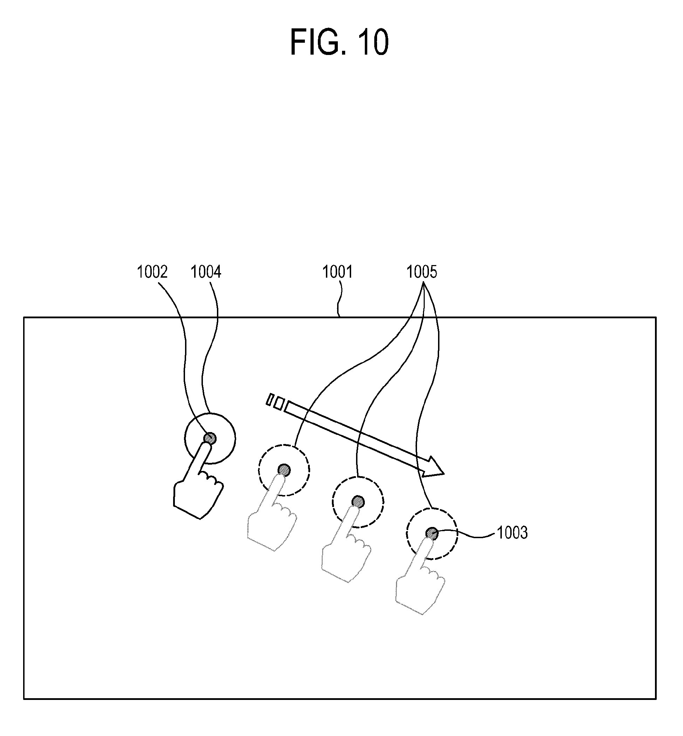

Alternatively, once the touch input is detected, the controller 16 may determine the area, where the touch input is detected, as the touch expectation area. This is because there is high probability of touching an area at (i.e. again) at touched area, and/or around a touched area, for example, sliding, dragging, etc. once a user touches the area. FIG. 9 is a flowchart showing operations of the controller 16 according to an exemplary embodiment. First, at operation S901, the controller 16 detects whether there is a user's touch input on the touch area. If it is determined at operation S902 that there is a user's touch input, at operation S903 the controller 16 determines the touch expectation area with respect to the position where the touch input is generated. FIG. 10 shows an example of the controller 16 determining the touch expectation area, according to an exemplary embodiment. As shown in FIG. 10, if a user touches a certain position 1002 on the touch area 1001 of the touch panel 15, the controller 16 determines a touch expectation area 1004 with respect to the position 1002 where the touch input is generated. The touch expectation area 1004 may have various shapes, for example, a circle, an ellipse, a polygon, etc.

Referring back to FIG. 9, at operation S904 the controller 16 determines whether a user's touch input moves or not. If it is determined at operation S904 that the user's touch input moves, the controller 16 moves the touch expectation area along the movement of the touch input at operation S905. Referring to FIG. 10, if a user touches a first position 1002 and moves to a second position 1003 while keeping the touch, the controller 16 controls the touch expectation area 105 to move along the movement of the touch input. Accordingly, it is possible to continuously maintain the improved receiving sensitivity by active or even predictive operations in accordance with a user's touch situations.

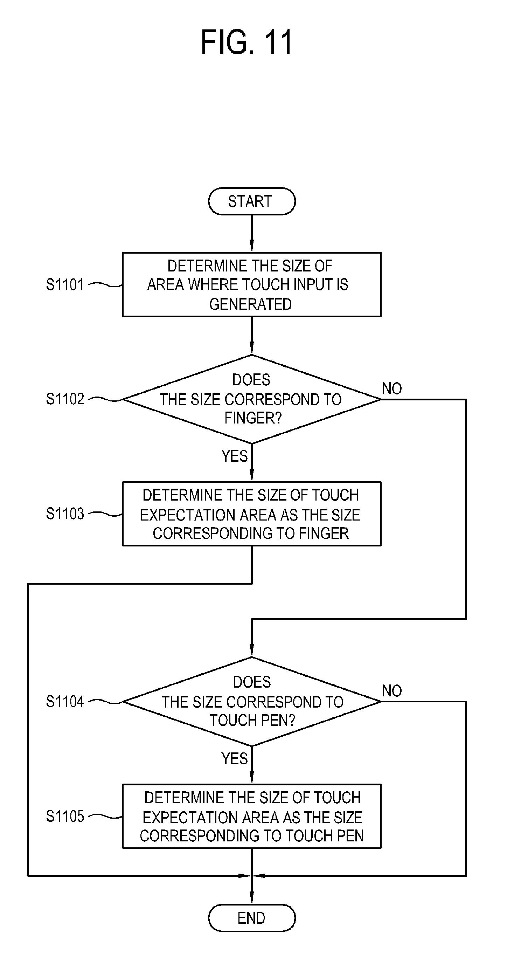

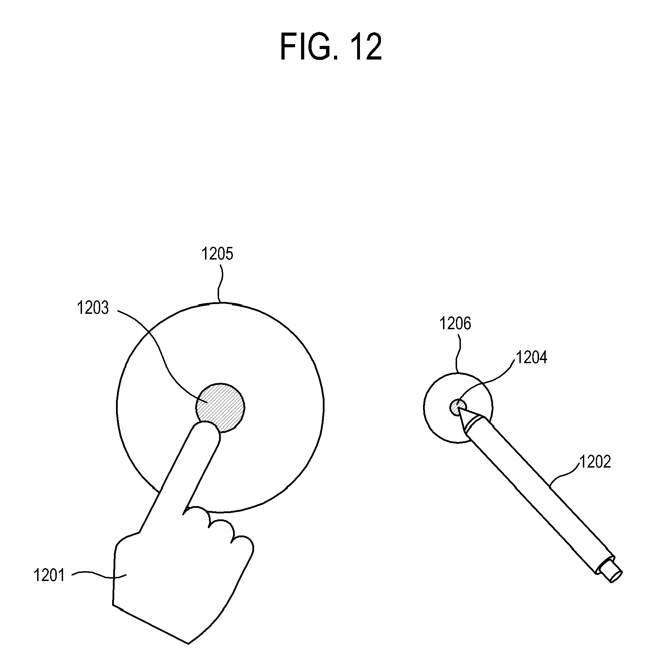

The size of the touch expectation area may be varied depending on touching methods. FIG. 11 is a flowchart showing operations of the controller 16 according to an exemplary embodiment. First, at operation S1101 the controller 16 determines the size of an area where the touch input is generated. That is, the area on or of the touch area, where the touch is detected, for example, which is touched with a user's finger or a touch pen. If it is determined at operation S1102 that the size of the area, where the touch input is generated, corresponds to a user's finger, at operation S1102 the controller 16 determines the touch expectation area as the size corresponding to the finger. Meanwhile, if it is determined at operation S1102 that the size of the area where the touch input is generated does not correspond to a user's finger, at operation S1104 the controller 16 determines whether the size of the area where the touch input is generated corresponds to a touch pen. If it is determined at S1104 that the size of the area where the touch input is generated corresponds to the touch pen, at operation S1105 the controller 16 determines that the size of the touch expectation area corresponds to the touch pen. FIG. 12 shows exemplary sizes of the touch expectation areas according to an exemplary embodiment. As shown therein, the size of the area 1203 touched with a user's finger 1201 is relatively larger than the size of the area 1204 touched with the touch pen 1202. Therefore, the size of the touch expectation area 1205 touched with the finger 1201 is determined to be larger than the size of the touch expectation area 1206 touched with the touch pen 1202. Alternatively, the touching method may be determined in accordance with a user's selection. For example, there are provided a finger mode for touching with a user's finger 1201 and a pen mode for touching with the touch pen 1202, and one of the modes may be selected in accordance with a user's input. The controller 16 may determine the size of the touch expectation area in accordance with the touching method based on the mode selected by a user.

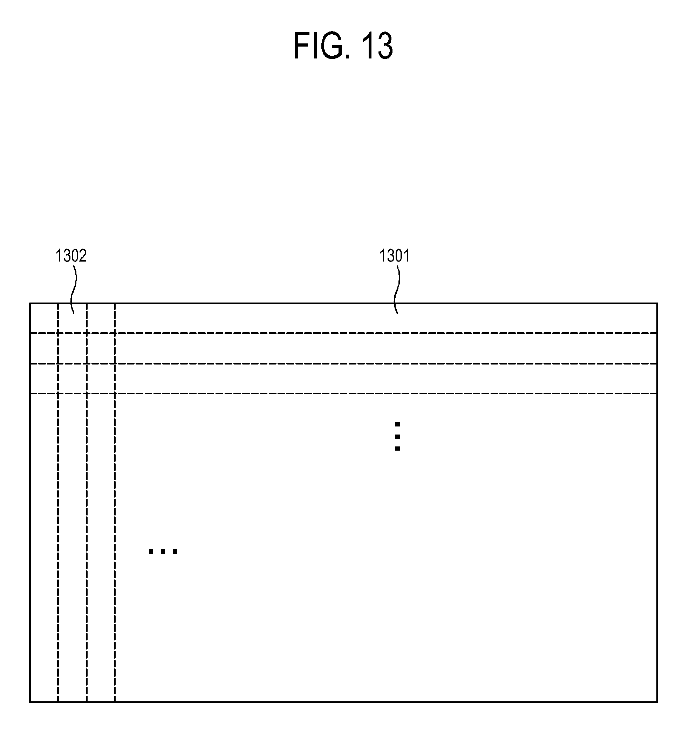

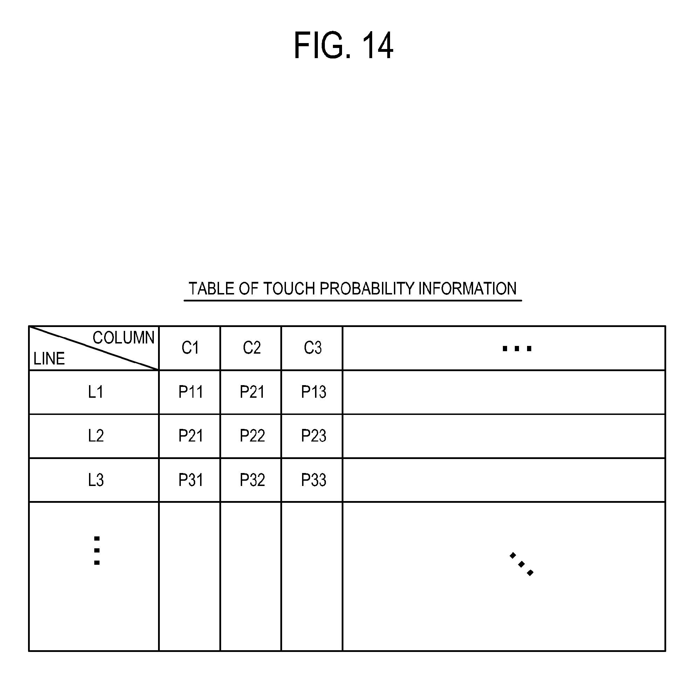

Alternatively, the controller 16 may determine the touch expectation area based on the touch probability information. The touch probability information may be stored in the storage unit 14. The touch probability information may be given based on a probability that a user's touch input will be generated at a predetermined position of the touch area. FIG. 13 illustrates an example of a touch area according to an exemplary embodiment. To acquire the touch probability information, the touch area 1301 may be divided into a plurality of unit areas 1302. The size of unit area 1302 may be determined by a proper number of unit areas 1302 in consideration of the touch area 1301, i.e., the size of the screen, operating ability, memory capacity, etc. The touch probability information may be tabulated. FIG. 14 illustrates an example of a table of touch probability information according to an exemplary embodiment. The table 1401 of the touch probability information may include fields of lines L1, L2, L3, ... and columns C1, C2, C3, ... The fields of the lines L1, L2, L3, ... and columns C1, C2, C3, ... correspond to the lines and columns of the respective unit touch area 1301, respectively. The table 1401 of the touch probability information contains the touch probability information P11, P12, P13, ... of respective unit areas 1302. That is, the touch probability information P11, P12, P13, ... refers to a value of probability that a user's touch input will be generated in each unit area 1302. The controller 16 may use the table 1401 of the touch probability information to determine the touch expectation area. The table 1401 of the touch probability information shown in FIG. 14 is nothing but an exemplary example, and may be achieved in other forms. For example, the table 1401 of the touch probability information may have the field of the plurality of pulse transmitting lines and/or receiving lines instead of lines L1, L2, L3, ... and columns C1, C2, C3, ..., and the touch probability information may be provided corresponding to each of the plurality of pulse transmitting lines and/or receiving lines.

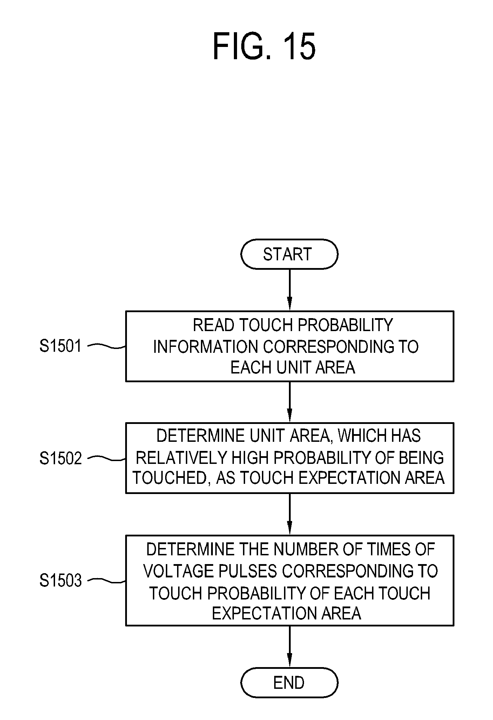

FIG. 15 is a flowchart showing operations of the controller 16 according to an exemplary embodiment. First, at operation S1501, the controller 16 reads the touch probability information P11, P12, P13, ... of each unit areas 1302 while referring to the table 1401. Next, at operation S1502, the controller 16 may determine the unit area 1302, which has relatively high probability of being touched, as the touch expectation area based on the read touch probability information P11, P12, P13,... Here, two or more touch expectation areas may be determined. Further, two or more adjacent unit areas 1302 may be grouped as one touch expectation area. Next, with regard to two or more touch expectation areas, at operation S1503 the controller 16 determines the number of times the voltage pulses are transmitted corresponding to the touch probability in each touch expectation area. That is, the number of times the voltage pulses are transmitted increase as the touch expectation area touch probability increases. The controller 16 transmits the voltage pulses as many times as is determined to the pulse transmitting line corresponding to the relevant touch expectation area.

The controller 16 monitors whether a user's touch input is received during the operation, and updates the table 1401 of the touch probability information corresponding to the received touch input. That is, the controller 16 determines which unit area 1302 the touch input is generated, and changes the touch probability information P11, P12, P13,... of the relevant unit areas 1302. Meanwhile, two or more tables 1401 may be provided for the touch probability information. The plurality of tables 1401 for the touch probability information may be provided in accordance with applications. That is, the proper touch probability information P11, P12, P13, ... of the unit area 1302 having high probability of being touched is used while a certain application is executed, thereby improving the reliability of the receiving sensitivity. Alternatively, the plurality of tables 1401 for touch probability information may be provided in accordance with users. That is, the proper touch probability information P11, P12, P13,... is used corresponding to a touch habit of a certain user, thereby improving the reliability of the receiving sensitivity.

It has already been described that if a user's hand approaches the touch panel, the electromagnetic field is partially absorbed in, or affected by, the user's hand and therefore total energy received in the receiving line is reduced or at least changes. Such a change in energy causes voltage variation in the receiving line, and thus a position where touch is generated can be determined based on this voltage variation. It may be the case that the presence or proximity of the user's hand can be determined before touch contact has actually taken place. This presence/proximity detection could be used to determine or initially predict a touch expectation area, to in turn change the number of generated voltage pulses as described above, in addition to, or as an alternative to, the touch expectation area determination approaches already described.

As described above, according to an exemplary embodiment, a user's touch input can be detected with more improved receiving sensitivity.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (1) comprising:
a display (13) which configured to display an image (601);
a touch panel (15) which comprises a plurality of pulse transmitting lines (603) distributed with regard to a touch area of the touch panel, wherein voltage pulses are transmitted to the plurality of pulse transmitting lines, and a plurality of receiving lines (602) distributed with regard to the touch area configured to detect a user's touch input on the touch area based on the voltage pulses transmitted to the pulse transmitting lines; and
a controller (16) configured to control a number of the voltage pulses to the plurality of pulse transmitting lines, wherein the number of the voltage pulses transmitted to the plurality of pulse transmitting lines (612) corresponding to a touch expectation area (606, 607) of the touch area is greater than those voltage pulses transmitted (613) to other areas of the touch area.

2. The display apparatus according to claim 1, wherein the touch expectation area comprises an area for an item having a graphic user interface (GUI) which is displayed on the display.

3. The display apparatus according to claim 2, wherein the controller is configured to determine the area for the item using information provided by an application configured to display the item.

4. The display apparatus according to claim 2 or claim 3, wherein the controller recognizes the area for the item by analyzing an image being displayed on the display.

5. The display apparatus according to one of claims 1 to 4, wherein once the touch input is detected, the controller is configured to determine an area at a position, where the touch input is detected, to be the touch expectation area.

6. The display apparatus according to claim 5, wherein if the user's touch input is moved, the controller is configured to move the touch expectation area along the movement of the touch input.

7. The display apparatus according to one of claims 1 to 6, further comprising a storage unit configured to store touch probability information given based on a probability that the user's touch input will be generated at a predetermined position of the touch area,
wherein the controller determines the touch expectation area based on the touch probability information.

8. The display apparatus according to claim 7, wherein if the user's touch input is detected, the controller is configured to update the touch probability information corresponding to a position where the touch input is detected.

9. The display apparatus according to claim 7 or claim 8, wherein the storage unit is configured to store the touch probability information provided corresponding to a plurality of applications or a plurality of users.

10. The display apparatus according to one of claims 1 to 9, wherein the user's touch input is achieved by a user's finger or a touch pen, and
a size of the touch expectation area is determined in accordance with the user's finger and the touch pen.

11. The display apparatus according to one of claims 1 to 10, wherein the number of the voltage pulses transmitted to the plurality of pulse transmitting lines gradually increases the closer each of the plurality of pulse transmitting lines is to a center of the touch expectation area.

12. A method of controlling a display apparatus (1) comprising a display (13) for displaying an image (601), and a touch panel (15) for detecting a user's touch input, the method comprising:
transmitting voltage pulses to a plurality of pulse transmitting lines (603) distributed with regard to a touch area of the touch panel;
detecting a user's touch input on the touch area, based on the voltage pulses transmitted to the pulse transmitting lines; and
controlling a number of the voltage pulses transmitted to the plurality of pulse transmitting lines, wherein the number of the voltage pulses transmitted to the plurality of pulse transmitting lines (612) corresponding to a touch expectation area of the touch area is greater than those voltage pulses transmitted to other areas of the touch area (613).

13. The method according to claim 12, wherein the touch expectation area comprises an area for an item of a graphic user interface (GUI) which is displayed on the display.

14. The method according to claim 12 or 13, wherein the controlling comprises:
determining the touch expectation area based on touch probability information given based on a probability that the user's touch input will be generated at a predetermined position of the touch area and stored in a storage unit.

15. The method according to one of claims 12 to 14, wherein the number of the voltage pulses transmitted to the plurality of pulse transmitting lines gradually increases the closer each of the plurality of pulse transmitting lines is to a center of the touch expectation area.
